(19) Europäisches Patentamt
European Patent Office
Office européen des brevets

(11) Publication number: **0 120 263**
**B1**

# (12) EUROPEAN PATENT SPECIFICATION

(45) Date of publication of patent specification: **28.10.87**

(51) Int. Cl.[4]: **B 64 C 39/00**

(21) Application number: **84101550.6**

(22) Date of filing: **16.02.84**

## (54) Helicopter-Airplane Compound Aircraft.

(30) Priority: **22.02.83 GR 70574**

(43) Date of publication of application:
**03.10.84 Bulletin 84/40**

(45) Publication of the grant of the patent:
**28.10.87 Bulletin 87/44**

(84) Designated Contracting States:
**AT BE CH DE FR GB IT LI LU NL SE**

(56) References cited:
**DE-A-1 506 566**
**FR-A-1 107 257**
**FR-A-2 081 263**
**US-A-3 107 071**

(73) Proprietor: **Papandreadis, Elias**
**58 Douzinas Str.**
**GR-18020 Poros Troizianias (GR)**

(72) Inventor: **Papandreadis, Elias**
**58 Douzinas Str.**
**GR-18020 Poros Troizianias (GR)**

(74) Representative: **Ruschke, Olaf et al**
**Patentanwälte Dipl. Ing. Olaf Ruschke Dipl. Ing. Hans E. Ruschke Dipl.-Ing. Jürgen Rost Dipl.-Chem Dr. U. Rotter Pienzenauerstrasse 2**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 120 263 B1

**Description**

1. Technical field

The present invention relates to a flying craft having the flight performance of a helicopter as well as a jet aircraft, with reduced engine power.

2. Background art

The mechanics theory of fluids, its formulas and relationships are used in the present invention, and the Magnus phenomenon is exploited in it. One of the many books concerning this field is the Hunter House and F. W. Howe entitled "Basic Mechanics of Fluids" edited in 1953 in New York by John Wilay and Sons, Inc. (Library of Congress Catalog Card Number 53-6518).

3. Prior art

3.1. Helicopter prior art.

The axial flow horizontal main helice over its hull facilitates the balance but prevents any potential for high speeds and high ceiling.

3.2. Aircraft prior art

The high front pressure and the resulting drag are overcome by downstream impulse, provided either by helic air or jet combustion gas. This impulse, for supersonic speed, requires a large power engine and large fuel combustion.

Because the aircraft lift is generally based on the wings, vertical take-off and landing are unfeasible for such aircraft.

Some aircraft types, having a temporary lift capability by tilting their exhaust pipe or their helice, have reduced subsonic speed and service ceiling.

3.3. Prior art patented

The US—A—3 107 071 and the FR—A—1 107 257 patented aircrafts, corresponding to the features of the pre-characterizing part of claim 1, utilize a blower for lifting capability, but downstream impulse for horizontal motion.

4. Disclosure of the invention as claimed

4.1. Concept of horizontal flight

The invention as claimed in claim 1 is intended to remedy the drawbacks in the previous paragraph 3 and to provide a total new concept of flight which consists of decreasing the front pressure below the downstream pressure of the air flow separation zone.

Thus, the helicopter—airplane compound aircraft, called helicoplane here after for abbreviation purposes will be pushed forward by the atmospheric air instead of being dragged. According to the Magnus phenomenon, this decrease of front pressure could be effected by adding to the front air flow, a rotational velocity by a rotating ring (8). This rotating ring (8) could be combined with a horizontal blower (11) instead of a horizontal helice for vertical take-off and landing, as well as for initial horizontal motion.

For substantial speed, the concept of motion is combined with a low drag hull (1, 2) which incorporates the horizontal blower.

This horizontal blower provides vertical motion by its blades and by its external rotating surface it provides the horizontal motion of the helicoplane.

4.2. Helicoplane hull

Because the hull incorporates the blower horizontally, it is circular. For purposes of low drag, the helicoplane has to have a lens shaped upside boundary (1, 2) and a flat lowerside boundary (3) and both must permit tangential and irrotational air flow.

For this purpose, the upperside boundary is characterized by the relationship:

$$\frac{\tau^2}{Z^2} = b^2 - \frac{z^2}{R^2} + 2b\,\frac{z}{R}\,\mathrm{ctg}\left[\frac{2b}{(1-b^2)}\;\frac{z}{R}\right]$$

Where Z is the vertical axis, R is the horizontal axis and also the horizontal maximum radius, $\tau$ and z are the coordinates of any surface point and b has the following values:

| $\frac{R}{z_{max}}$ = | 2 | 3 | 5 |
|---|---|---|---|
| b = | 0.781 | 0.8712 | 0.9665 |

Other surfaces almost similar to the semiellipsoidal are acceptable. The curved upperside boundary and the flat lowerside boundary provide an additional lift during horizontal motion.

4.3. Flaps

To balance the front torque, and for manoeuvering capability, the hull is provided with the following flaps.

The front downside flap (4) of 0.22 $R^2m^2$ total area
The rear upside flap (5) of 0.15 $R^2m^2$ total area
The rear downside flap (6) of 0.15 $R^2m^2$ total area.
The two center downside flaps (7) $2\times 0.102$ $R^2m^2$ total area.

The three first flaps are required to balance the front torque of the hull as well as to secure the steady linear flight.

The flight stability is provided by tilting the rear flaps in opposite direction, to provoke a restoration torque at any horizontal flight tilt.

All flaps could increase the lift if required, as during gliding flight or while landing. Also, they can cause an abrupt lifting by an 8g acceleration. The two central lowerside flaps (7) are balancing the side torque of the front rotating flow, caused by the rotating ring. They can also cause an abrupt side rotation of 90° in 0.6 seconds.

4.4. Rotating ring

The external surface of the rotating ring adds rotational speed to the front air flow and provokes the Magnus phenomena. It is covered all around by the flight cover apart from the front segment which is symmetrical to the downstream air flow separation zone.

This flight cover is the lower part of the upperside helicoplane boundary. The ring rotating surface is characterized by having the same surface relationship as the hull, on Z vertical R horizontal axises

$$\frac{\tau^2}{R^2}=b^2-\frac{z^2}{R^2}+2b\frac{z}{R_1}\mathrm{ctg}\left[\frac{2b}{(1-b^2)}-\frac{z}{R_1}\right] \text{ or } \frac{\tau^2}{R^2}+K^2\frac{z^2}{R^2}=1$$

where $R_1=0.96$ R of the hull maximum radius.

The decreased helicoplane front pressure, provided by the rotating ring, is balanced by the rear pressure of the helicoplane downstream separation zone, which corresponds to an helicoplane speed of about the double of the ring perimeter speed. This speed is independent of the atmospheric altitude density. The required engine power for the side impulse of the helicoplane front air flow is a small percentage of that required for conventional downstream impulse of the same weight and speed aircrafts.

That is natural, because in Magnus phenomena, a rather thin air layer has a mean side speed which is only 8% of the helicoplane speed.

4.5. Vertical blades

To balance horizontal torque and for the purpose of manoeuver capability, the hull is provided with the following blades.

The rearside blades (9) of 0.175 $R^2m^2$ total area.
The central lowerside blades (10) of 0.06 $R^2m^2$ total area.

Both of them are required to balance the side thrust of the uncovered rotating ring pressure. The rearside blades (9) also balance the torque of this side thrust around the vertical axis z.

The central lowerside blades (10) can cause, if required, an abrupt side motion of 8g acceleration at low altitudes.

4.6. Helicoplane blower (Fig. 9)

The blower is horizontal and of mixed-flow type. The blower impeller is constituted by two surfaces; the inner surface has a frustum shape. The outer surface is frustum shaped on its inner side and has the curved rotating ring (8) on its external side. Between these two surfaces are fixed the impeller blades. These blades are tilted in such a way that the surface angular speed is about seven times the blower rate flow angular speed.

The impeller is rotating around the cabin hull by means of bearings (21) and/or a magnetic field. Also, a rotation transmission ring (22) is provided. Above and below, the impeller there are two circular openings (12 and 13) to allow for the vertical air flow.

In these two openings, the non-rotable air stream deflector vanes for driving the air flow and balancing the torque of the blower flow, as well as its friction torque are provided. Figure 8 shows the blower impeller in cross section, and Fig. 9 shows the blower impeller from above (14) and from below (15).

Finally, this horizontal blower causes two motions. The vertical motion is provided by its blades as well as the initial horizontal motion of low speed. The horizontal motion with high speed is caused by its external surface which decreases the front pressure.

4.7. Blower vanes

To tilt the helicoplane toward any direction, the upper opening (12) is provided with the tilt vanes (23), which can be moved to close this opening partly and consequently reduce the lift force on the subsequent segment of the blower. To improve the initial horizontal speed of the helicoplane, an impulse vane (24) is utilized. This vane when extended under the opening (13) at its down stream segment, tilts the rear blower flow horizontally downstream.

5. Description of figures

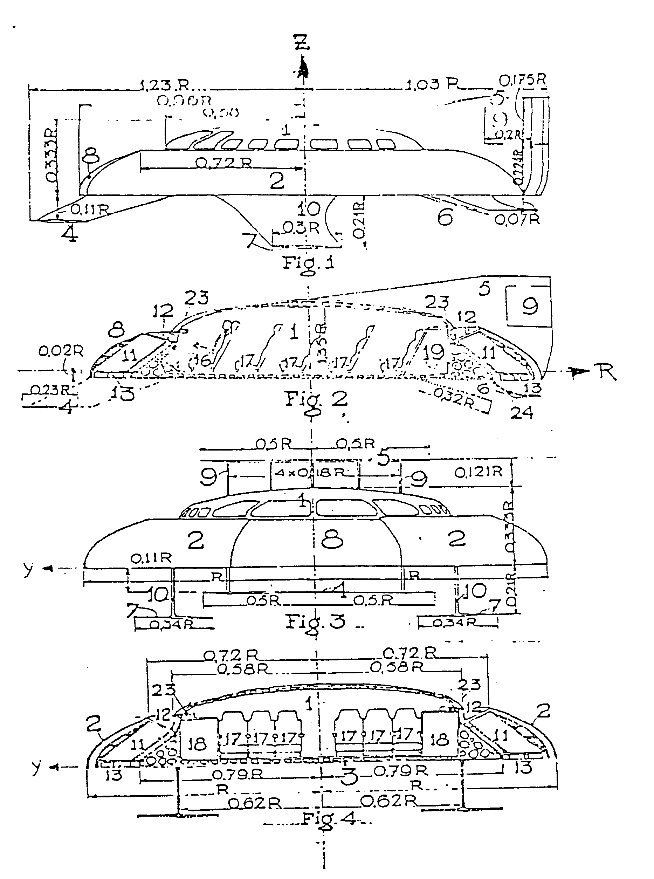

Fig. 1 is the side view of the helicoplane. Reference No. 1 is the hull, 2 and 3 are the upper and lower surfaces of the hull 4, 5, 6 and 7 the flaps, 8 the rotating ring, 9 and 10 the vertical blades.

Fig. 2 is a cross section in the motion direction. Reference No. 1 to 10 are the same as above, 11 is the horizontal blower. 23 and 24 are the tilt and impulse vanes.

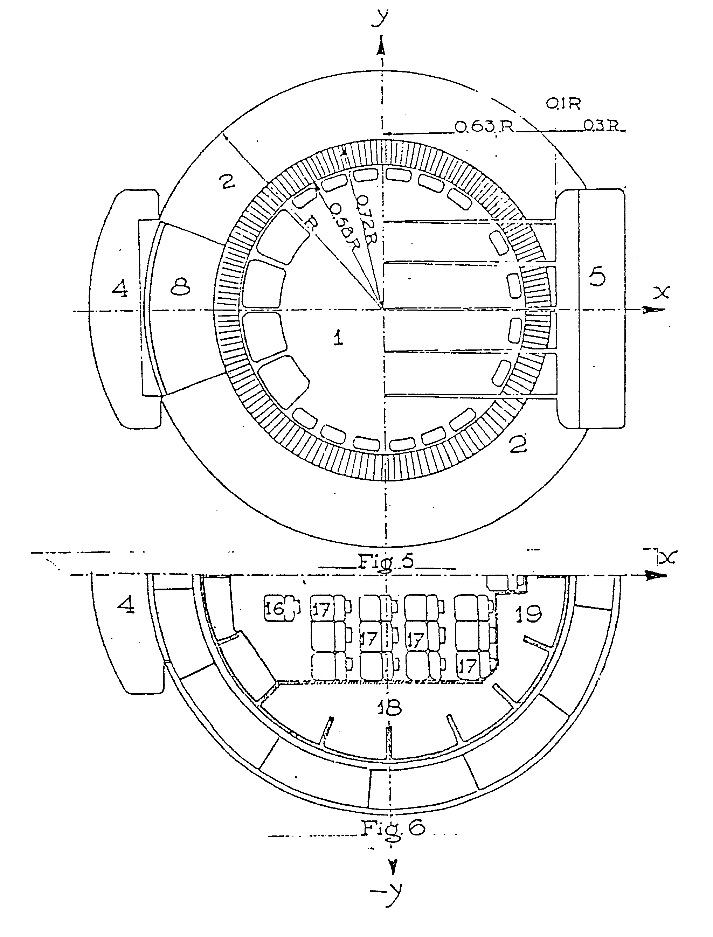

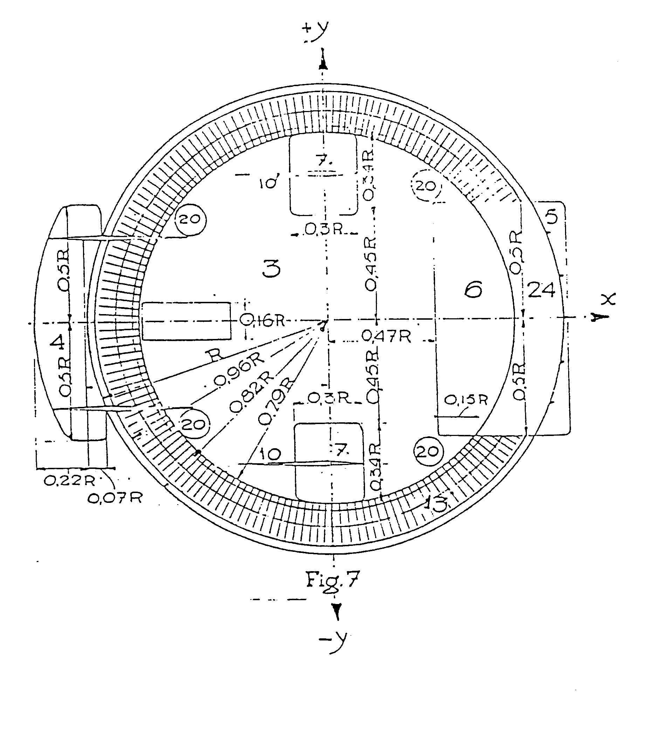

Figure 3 is the front view of the helicoplane.

Figure 4 is a cross-section, normal to the motion direction. Reference No. 1 to 10 are the same as above, 12 and 13 are the circular openings, above and below the blower, for the blower flow.

On these openings are fixed the upper and lower drive vanes of the air flow.

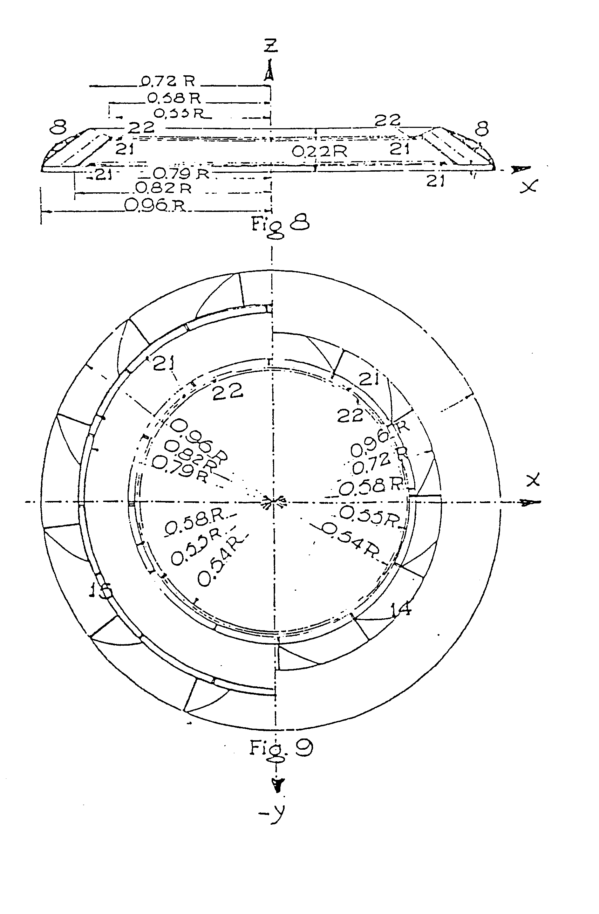

Fig. 5 is the view of the helicoplane from above.

Fig. 6 is half the horizontal cross section of the helicoplane. No. 1 to 13 are the same as above. No. 16 is the pilot seat. No. 17 is the passenger or troop seats. 18 is the engine, the mechanisms and the fuel tank space. 19 is the cargo space. The cabin accommodation corresponds to a helicoplane radius of 5 m.

Fig. 7 is the view of the helicoplane from below. No. 1 to 19 are the same as previously mentioned. No. 20 is the under carriage shock absorber struts.

Fig. 8 is a cross-section of the blower impeller. No. 1 to 20 are the same as previously mentioned. No. 21 is the bearing rings. No. 22 is the ring of movement transmission.

Fig. 9 is the view of the blower impeller. No. 14 is the view from above. No. 15 is the view from below.

6. Details and examples of the invention

The "Helicoplane Hélice and Flight Theories" includes the theory, the respective relationships and the computation of diverse flight cases of helicoplane and have been composed by the inventor.

The following are the main characteristics of the helicoplane:

6.1. For any helicoplane with full wingload of 100 kg/m$^2$

| | |
|---|---|
| Service ceiling | 22700 m. |
| Ceiling climb time | 3 min. |
| Maximum ceiling speed | 2.95 Mach. |
| Maximum low level speed | 2.58 Mach. |
| Minimum low level speed | 0 |
| Vertical climb speed | 15 m/s |
| Abrupt vertical or side motion acceleration if required 8g or | 78 m/sec$^2$ |
| 90° abrupt rotation time, around motion direction, if required | 0.6 sec. |
| Looping radius | 10.5 km. |

6.2. For helicoplanes full wingloaded with 100 $kg/m^2$ and of radius.

| R= | 3 | 5 | 7 | 10m |
|---|---|---|---|---|
| Total weight | 2830 | 7850 | 15400 | 31400 kg |
| Engine power | | | | |
| Indicative | 2350 | 5900 | 10900 | 17400 HP |
| Required at ceiling | 95 | 235 | 435 | 693 HP |
| Required at ground | 1380 | 3470 | 6430 | 10420 HP |
| Fuel tank weight | | | | |
| Main | 160 | 380 | 710 | 1150 kg |
| Auxiliary | 100 | 230 | 430 | 700 kg |
| OPS flight range at low altitude with | | | | |
| main tanks | 750 | 750 | 750 | 750 km |
| with auxiliary tanks | 1240 | 1240 | 1240 | 1240 km |
| at ceiling | 8970 | 8600 | 8750 | 8750 km |
| Endurance | | | | |
| At ceiling | 325 | 312 | 317 | 317 min. |

7. Exploitation of the invention

The invention is exploitable because it is advantageous from all points of view in comparison with existing aircraft, and it is also less costly.

The main advantage in comparison with utilized aircraft are as follows:

7.1. With regard to all aircraft

| | |
|---|---|
| Construction costs without avionics | 25% |
| Maintenance costs without avionics | 25% |
| Range practically unlimited | |
| Vertical take-off and landing | |

The total flight cost of a helicoplane is less than 20% of a conventional commercial aircraft and the helicoplane amortization is no more than 25% of the aircraft.

Thus, a strong economic motive exists to substitute the conventional aircraft by helicoplane even if the capital amortization of the first is not completed.

7.2. With regard to commercial aircraft

Number of helicoplanes required is 33% of conventional transport aircraft.

Number of crew required is one third.

Fuel consumption is 3%.

Take-off and landing on downtown fields.

7.3. With regard to military aircraft

Fuel consumption is 3%

Ceiling speed 20% greater than with conventional aircraft

Low level speed more than two times greater.

Abrupt motion normal to flight 8g acceleration 8g Looping radius 10.5 km.

Full dispersion and hiding away from airfields.

Operation possibility from forward positions or from ships no greater than 3000 t.

8. Motion

The helicoplane flight includes the following phases.

8.1. Vertical take-off up to an altitude of 20 to 2000 m. The 20 m. are accomplished in 4 seconds.

8.2. Tilt of the helicoplane to the front direction is accomplished by using tilt vanes (23) and subsequently, horizontal motion begins.

8.3. An increase of horizontal speed is accomplished by tilting the rear vertical blower air flow downstream. This is effected by the impulse vane (24). This phase lasts 8 seconds with a final horizontal speed of 21 m/s.

8.4. The acceleration increase phase from 21 m/s to 407 m/s horizontal speed lasts one minute. The increase of the acceleration is due to the Magnus phenomena of the rotating ring and the final acceleration is 34 m/sec.$^2$.

8.5. The acceleration decreasing phase from 407 m/s to 904 m/s lasts two minutes with final acceleration being 2.2 m/sec.$^2$.

8.6. At 904 m/s begins the steady speed phase which lasts at low altitudes for 24 to 42 minutes and at the ceiling altitude for about 5 hours.

8.7. Losing altitude phase can be performed by gliding.

8.8. Landing is to be done vertically at any pad or by gliding on an airfield runway.

**Claims**

1. Helicopter—airplane compound aircraft having a low drag hull (1, 2, 3) means for horizontal aircraft motion and a blower (11) incorporated in the aircraft hull, for vertical take-off and landing, characterized in that the hull front surface pressure is decreased to lower than the pressure of the aircraft rear separation zone and consequently the aircraft will be pushed forward by the atmospheric air, instead of being dragged, and according to the Magnus phenomenon this decrease of front pressure is effected by adding to the front airflow a rotational velocity by a rotating ring (8), which is combined with the horizontal blower (11) and that rotating ring (8) is uncovered at a hull front segment symmetrical to the aircraft rear separation zone.

2. Helicopter—airplane compound aircraft according to claim 1, characterized by a lens shaped upper (1, 2) and a flat lower boundary (3) of the hull, and this lens shaped upper boundary is permitting tangential and/or irrotational air flow and is providing an additional lift during horizontal motion, so that a gliding flight for landing is feasible.

3. Helicopter—airplane compound aircraft according to claim 1, characterized by flaps provided on the hull, which are the front lower (4), the rear upper (5), the rear lowerside (6) and the central lowerside (7) flaps, the three first flaps being required to balance the front torque of the hull, as well as to secure a steady linear flight, and all of them could augment the lift when required, or cause an abrupt lifting of 8g acceleration, instead the two central lowerside flaps (7) are balancing the side torque of the frong rotating flow, caused by the rotating ring (8) and also they can cause an abrupt rotation around motion direction.

4. Helicopter—airplane compound aircraft according to claim 1 characterized by blades provided on the hull which are the rearside (9) and the central lowerside (10) blades, and both of them are required to balance the frong side thrust, which is caused by the rotation at the front air flow, effected by the uncovered section of the rotating ring (8), and that the rearside blades (9) balance also the torque of this front side thrust around the central central vertical axis of the aircraft.

5. Helicopter—airplane compound aircraft according to claim 1, characterized by a partly radial and partly axial blower (11) incorporated in the hull (1, 2, 3) and close to its lower upperside boundary, and the impeller of that blower is supported by the hull or vice versa by bearings (22) and/or a magnetic field, and above and below the impeller are the above opening (12) and the below opening (13) to allow the blower air flow, and these openings are equipped with vanes, and the external surface of the impeller has a surface shape similar to the external surface shape of the hull.

6. Helicopter—airplane compound aircraft according to claim 1 characterized in that the blower vanes which are the non-rotable airstream deflector vanes fixed on the two openings (12, 13) of the blower, for driving vertically its air flow and to balance the torques provided by the rotation of the blower air flow and the bearings friction, and that the tilt vanes (23) provided for permitting the diminuation of the vertical air flow on a segment of the opening (12) for reducing partly the lift and tilt of the aircraft in a desired direction, and that an impulse vane (24) is provided for permitting the tilt of the blower air flow on the rear of the aircraft, horizontally and downstream for increasing the horizontal speed.

**Patentansprüche**

1. Verbundhubschrauber mit Rumpf mit geringem Luftwiderstand (1, 2, 3) für horizontal Flugbewegung und mit in dem Rumpf des Flugzeuges eingebautem Horizontalgebläse (11) für Senkrechtstart und -landung, dadurch gekennzeichnet, daß das Druckprofil an der Nase auf einen Wert unter dem Druckprofil der hinteren Trennungsfläche abgeschwächt wird. Folglich wird der Flugkörper durch die atmosphärische Luft nach vorne gedrückt statt gebremst. Aufgrund des Magnuseffektes konnte dieser Reduzierung des Druckprofiles der ankommenden Luft entgegengewirkt werden, indem dem ankommendem Luftström eine Drehgeschwindigkeit durch Anbringung einer mit dem Horizontalgebläse (11) kombinierten Kreisscheibe (8) verliehen wird, und dadurch gekennzeichnet, daß die Kreisscheibe (8) an einem zur hinteren Trennungsfläche des Flugzeuges symmetrischen Rumpf-Frontsegment nicht abgedeckt ist.

2. Verbundhubschrauber gemäß Patentansprüch 1, gekennzeichnet durch eine linsenförmige obere (1, 2) und eine flach ausgebildete untere Begrenzungsfläche (3) des Rumpfes. Diese linsenförmige obere Begrenzungsfläche gestattet eine tangentiale und/oder wirbelfreie Strömung und sorgt für einen zusätzlichen Auftrieb während der Transitionsphase, so daß der Landeanflug im Gleitflug möglich ist.

3. Verbundhubschrauber gemäß Patentanspruch 1, gekennzeichnet durch am Rumpf angebrachte Klappen, bei denen es sich um die vordere Klappe unten (4), die hintere Klappe oben (5), die hintere Klappe unten (6) und die mittleren Klappen unten (7) handelt, wobei die ersten drei Klappen zum Ausgleich des an der Rumpfvorderseite aufgrund der Auslegung des Rumpfes auftretenden Rollmomentes und zur Gewährleistung der Längsstabilität erforderlich sind. Alle Klappen sind in der Lage, im Bedarfsfall füll erhöhten Auftrieb zu sorgen. Ein plötzlicher Auftrieb durch eine 8 g-Beschleunigung kann durch diese ebenfalls ausgelöst werden. Die beiden mittleren Klappen unten (7) gleichen das Nickmoment, das durch die Kreisscheibe (8) verursacht wird, aus; sie können eine abrupte Bewegung in Längsrichtung verursachen.

4. Verbundhubschrauber gemäß Patentanspruch 1, gekennzeichnet durch am Rumpf angebrachte Vertikalblätter. Es handelt sich dabei um die rücklaufenden Blätter (9) und die vorlaufenden Blätter (10), die beide zum Ausgleich des Querschubes benötigt werden, der durch die Rotation der an der Nase herrschenden Luftströmung hervorgerufen wird, die wiederum auf den Druck der unabgedeckten Kreisscheibe (8) zurückzuführen ist, und dadurch gekennzeichnet, daß die rücklaufenden Blätter (9) ebenfalls das horizontale Drehmoment der mittleren Vertikalachse des Flugzeuges ausgleichen.

5. Verbundhubschrauber gemäß Patentanspruch 1, gekennzeichnet durch ein radiales und axiales Mischgebläse (11), das in den Rumpf (1, 2, 3) in der Nähe seiner unteren/oberen seitlichen begrenzungsfläche eingebaut ist. Das Gebläserad wird vom Rumpf oder wechselseitig von Lagern (22) und/oder einem Magnetfeld getragen. Über und unter dem Laufrad befinden sich die obere Öffnung (12) und die untere Öffnung (13) für den gerichteten Luftstrom des Gebläses. Diese Offnungen sind mit Klappen ausgestattet; die Außenflächenform des Gebläserades hat Ähnlichkeit mit der äußeren Oberflächenform des Rumpfes.

6. Verbundhubschrauber gemäß Patentanspruch 1, gekennzeichnet dadurch daß die nicht rotierenden Strömungsklappen an den beiden Öffnungen (12, 13) befestigt sind; sie dienen der vertikalen Richtung des Luftstromes und zum Ausgleich des Drehmomentes des Gebläses und der Lagerreibung, und dadurch gekennzeichnet, daß die Schwenkflügel (23) die Drosselung des vertikal gerichteten Luftstromes auf ein Segment der Öffnung (12) ermöglichen, wodurch teilweise der Auftrieb verringert und das Schwenken des Flugzeuges in die gewünschte Richtung ermöglicht wird, und dadurch gekennzeichnet, daß eine Impulsklappe (24) zur Schwenkung des auf das Gebläse auftreffenden Luftstromes auf der Helicoplane-Rückseite horizontal und nach unten zur Erhöhung der Vorwärtsgeschwindigkeit vorgesehen ist.

**Revendications**

1. L'helicoptère combiné aillant un moyen de coque (1, 2, 3) de petite trainée, pour le mouvement horizontal et une hélice (11) incorporée dans sa coque pour le decollage et l'atterissage vertical, est characterizé par la reduction de sa pression frontale, plus bas que sa pression arrière de la zône de decollage du courant, et par concéquent il est poussé en avant par l'air atmospherique au lieu, d'être aspiré en arrière, et suivant le phénomène Magnus, cette reduction de la pression frontale est effectuée en donant a l'air attegnant la proue une vitesse rotative par un anneau tournant (8) qui est combiné avec l'hélice horizontale semi-centrifuge (8) et cet anneau tournant (8) est decouvert a un segment frontal de la coque, symmetrique de la zône arrière de decollage du courant.

2. L'helicoptère combiné, selon la 1re revendication est characterisé par une coque ayant une enveloppe supérieure (1, 2) de forme de lentille et une enveloppe inferieure (3) plane, et cette enveloppe superieure de forme de lentille permet un courant d'air tangentiel et oui on non irrotationel et procure une hausse additionelle pendant le mouvement horizontal, qui fait possible un atterissage à vol plané.

3. L'hélicoptère combiné, selon la 1re revendication, est characterisé par des gouvenails de fond, avec les quelles la coque est munie et qui sont, l'inferieur d'avant (4), le supérieur de derrière (5) l'inferieur de derrière (6) et les inferieurs du milieu (7), les trois premiers etant nécessaires pour equilibrer le moment vertical avant de la coque et pour assurer un vol rectiligne stable, et tous peuvent augmenter la hausse quant il est necessaire, ou causer un brusque mouvement vertical d'une accélération de 8 g, en plus les deux inferieurs du milieu equilibrent le moment lateral du courant d'air totatif frontal, qui est provoqué par l'anneau tournant, mentioné à 1er revendication, et aussi peuvent causer une brusque rotation autour de la ligne de vol.

4. L'helicoptère combiné, selon la 1er revendication est characterisé par des gouvernails verticaux avec les quelles la coque est munie et qui sont ceux de la poupe (9) et les inferieur du milieu (10), et tous sont nécessaires pour equilibrer la force laterale frontale produite par la difference de pression de la partie découverte de l'anneau tournant, en plus les gouvernails verticaux de la poupe (9) equilibrent le moment de cette force laterale frontale autour de l'âxe vertical symmetrique z de l'avion.

5. L'helicoptère combiné, selon la 1er revendication, est characterisé par une hélice (11) en partie radiale et en partie axiale, incorporée dans la coque (1, 2, 3) au bas et prés de l'enveloppe superieure, et le rotor de cette hélice est supporté par la coque, ou vice versa, an moyen de roulements (22) on d'un champ magnétic, et par dessus et par dessous des aubes de l'hélice sont prevues l'ouverture superieure (12) et l'ouverture inférieure (13) pour permettre l'écoulement vertical de l'air, et ces ouvertures sont munies avec des ailettes, et la surface externe du rotor est d'un profil pareil à celui de l'enveloppe superieure de l'avion.

6. L'helicoptère combiné, selon la 1^er revendication, est characterisé par les ailettes de l'hélice qui sont les ailettes non-rotatives detournante du courant, fixées dans les deux ouvertures (12, 13) de celui ci, pour guider verticalement l'ecoulement de l'air des aubes et pour equilibrer les moments horizontaux provoqués par la rotation de l'hélice et par la friction des roulements (21), et aussi les ailettes d'inclinaison (23) qui peuvent reduire l'ecoulement vertical de l'air d'un segment de l'ouverture superieure (12) pour reduir la hausse de ce segment et par concequand incliner l'avion à une direction voulue, et aussi une aile de poussée (24) est prevue pour detourner l'ecoulement vertical du segment arriere de l'hélice, horizontalement en arrière de l'avion pour augmenter la vitesse horizontale initiale.

Z
1,23 R
1,03 R
0,175R
0,333R
0,72 R
0,2R
0,224R
0,11R
0,3R
0,21R
0,07R
R
0,02R
0,23R
0,32R
0,5R
4×0,18R
0,121R
0,11R
0,34R
0,72 R
0,58R
0,79R
0,62R
y
Fig. 1

Fig. 2

Fig. 3

Fig. 4

y
0.1R
0.63 R
0.3R
2
0.72R
0.58R
R
4
8
5
x
1
2
Fig.5
x
4
16
17
17
17
17
19
18
Fig.6
-y

+y
7.
10'
0,34R
20
20
5
0,3R
3
0,45R
6
0,5R
24
x
0,5R
0,16R
4
0,47R
R
0,96R
0,5R
0,82R
0,45R
0,15R
0,5R
0,79R
0,3R
20
7.
10
0,34R
20
0,22R
0,07R
13
-y
Fig. 7

Z
0,72 R
0,58 R
0,55 R
8
22
22
8
21
0,22R
21
21
0,79 R
21
0,82 R
0,96 R
X
Fig 8
21
22
21
22
0,96 R
0,82 R
0,79 R
0,96 R
0,72 R
0,58 R
X
0,58 R
0,55 R
0,54 R
0,55 R
0,54 R
15
14
Fig. 9
-y